# EUROPEAN PATENT APPLICATION

(11) **EP 4 721 546 A1**
(43) Date of publication of application: **08.04.2026**
(21) Application number: 25174639.2
(22) Date of filing: 06.05.2025
(51) Int. Cl.: A01D 41/06

(54) **STRIPPER TOOTH PLATE AND BACKER PLATE MOUNTING FOR A CROP STRIPPER HEADER**

(30) Priority: 06.05.2024 US 202463643084 P
(71) Applicant: K-Hart Industries Ltd., Oak Bluff, MB R4G 0C4 (CA)
(72) Inventor: Kolegaev, Konstantin, Manitoba, R3Y 1A3 (CA); Shearer, Bruce, Manitoba, R3R 1A2 (CA)
(74) Representative: Handsome I.P. Ltd

(57) **Abstract**

In a crop stripper rotor including a central core defining angularly spaced mounting slots facing outwardly of the axis in each slot is mounted a stripper tooth section and an overlying backer section with the stripper teeth aligned with the backer fingers to form a pair held in place by threaded fasteners extending through mounting holes at the slot to secure the pair to the central core. Each threaded fastener is threaded to a plate on one side of the slot. The stripper second and backer section each have key hole shaped mounting slots at the inner edge so that rotation in an unthreading direction releases the sections to move outward for removal. The backer section is formed of plastic and includes a metal insert at the slot. The backer section has a ledge along the inner edge thereof and projecting knubs in one face to locate the stripper section.

## Description

This invention relates generally to crop strippers for harvesting crops from standing plants, and in particular, to a mounting arrangement for the stripper tooth plate and backer plate of a crop stripper header.

### BACKGROUND OF THE INVENTION

In Patent Publication WO 96/04776 (Shelbourne) published 22 February 1996 and assigned to Shelbourne Reynolds Engineering is disclosed a crop stripper header of this general type.

Crop stripper headers are attached to combines for harvesting grain. A stripper header includes a rotating stripper rotor in the front of the header with multiple rows (e.g., eight rows) of stripper teeth sections that strip grain from plants as the combine moves through a field. The stripper rotor rotates backwards relative to a direction of the combine's movement through the field. After the stripper rotor strips the grain, the grain and stripped crop material are deflected back into an auger and pan, moved to the center of the header, and fed into the feeder house of the combine for further threshing.

An advantage of a stripper header compared to a conventional header is that most of the grain is threshed within the header itself instead of within the threshing cylinder and concave of the combine. Thus, the material entering the combine to be threshed is mostly grain and chaff with very little straw and other plant material. The reduced plant material being threshed by the combine can result in a substantial increase in the capacity of the combine.

Thus the drums of crop strippers are provided at the periphery with stripper teeth arranged in a series of axial rows or combs each made up of a number of similar comb plates butted end to end. As the machine advances through the standing plants the drum is rotated with its lower periphery turning in the direction of advance and the plant stems are trapped in the spaces between the projecting teeth. As the stems are drawn around the drum by the teeth the grain or other crop is stripped from the stems.

For efficient operation the teeth of the stripper drum should not remove significant quantities of unwanted parts of the plants, in particular the stems, because that can interfere with the collection of crop that is being collected, and because they must subsequently be separated to be discarded. The efficiency of operation in this respect is dependent, to some extent at least, on an ability of the stripper teeth to yield to the resistance of the plant stems through which they are drawn. It is also necessary for the teeth to be able to yield to avoid damage when they strike obstacles on the ground.

Thus typically, metal toothing elements are provided, each having a plurality of teeth, the tooth profile comprising a radially outwardly tapering portion and a root portion inwardly of said tapering portion where the spacing between adjacent teeth increases to form a root opening with a maximum width greater than a radially outer neck of said opening, the teeth having an essentially continuous rearward flange running along the edges of the said profile including said root portions, and said toothing elements being arranged to be flexibly yieldable circumferentially of the drum.

Typically, a backing element behind the sheet metal tooth strip is provided in the form of an elongate strip having a series of similar projections at the same pitch as the teeth of a number of toothing elements with which it is associated. The projections are, however, narrower and shorter than the teeth, and the recesses 60 between them are slightly deeper than the recesses 62 between the teeth, so that they fit within the profile of the toothing elements as defined by flanging that extends continuously along the profiled edges of the teeth.

Maintaining and adjusting the stripper rotor of a conventional crop stripper header requires a tedious task of removing and replacing stripper teeth sections and backer plates from a central core of the rotor. There is a need for a stripper rotor with an improved system for mounting the stripper teeth sections and backer plates to the rotor.

The stripper teeth sections and backer plates are sandwiched between opposing flanges of adjacent bent sheet metal sections forming the central core. In the mounting system shown in the above publication mounting slots are provided in each metal stripper teeth section and in each plastic backer plate that open radially inwardly toward the central core.

Threaded fasteners engage with the mounting slots to set the depth and alignment of the stripper teeth sections and backer plates relative to the central core.

One issue which remains with stripper headers of this type is that they utilize a large number of "finger segments" on the rotor bats which are slow to install during assembly and are subject to frequent replacement due to damage and wear. The installation and replacement processes are labour intensive on current headers and it is an object of the present invention to provide an arrangement which speeds both procedures.

Another issue with stripper headers which have a rotor bats and fingers of similar design is that the hardware is clamping on the plastic of the backer plate which is not secure. Plastic volume is subject to expansion/contraction with varying temperatures and also tends to relax if put under compression load over time. These variations can cause the hardware to become loose and back out of the rotor, potentially losing the bolts or even finger segments.

### SUMMARY OF THE INVENTION

According to a first aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
each threaded fastener being threadedly connected to one of the parallel plates;
wherein the stripper tooth sections each have a slot extending from the inner edge outwardly toward the outer edge at each of the aligned mounting holes for receiving the respective one of the plurality of threaded fasteners;
wherein each of the slots is key hole shaped to define a narrower section at the inner edge and a wider section at a position spaced from the inner edge;
and wherein each threaded fastener has a wider portion for engaging into the wider section of the slot and an axially spaced narrower portion for engaging into the narrower section of the slot;
the threaded fastener being arranged such that in a fastened position the wider portion is axially aligned with the slot in the stripper tooth section to hold the stripper tooth section against movement in the outward direction;
the threaded fastener being arranged such that rotation thereof in an unthreading direction thereof moves the narrower portion axially to align the narrower portion of the slot in the stripper tooth section to allow the stripper tooth section to move in the outward direction for release.

Preferably also the backer sections each have a similar slot arrangement extending from the inner edge outwardly toward the outer edge at each of the aligned mounting holes for receiving the respective one of the plurality of threaded fasteners where each of the slots of the backer sections is key hole shaped to define a narrower section at the inner edge and a wider section at a position spaced from the inner edge and where each threaded fastener has a wider portion for engaging into the wider section of the slot of the backer section and an axially spaced narrower portion for engaging into the narrower section of the slot.

In this way the threaded fastener is arranged such that in a fastened position the wider portion is axially aligned with the slot in the backer section to hold the backer section against movement in the outward direction and such that rotation thereof in an unthreading direction thereof moves the narrower portion axially to align the narrower portion of the slot in the backer section to allow the backer section to move in the outward direction for release.

In this way the pair formed by the stripper tooth section and the backer section can be installed and removed as a pair while connected together and aligned. Alternatively the toothed section can be removed independently and replaced while the backer section remains in place.

Preferably the threaded fastener includes a shoulder for abutting a first of the parallel plates and a threaded section for threaded coupling to a second of the parallel plates so that rotation in a threading direction pulls the parallel plates together.

Preferably the second of the parallel plates has a formed thread in a hole therein. This acts to force the material of the plate into a collar section out of the plane of the plate to form a threaded collar into which the threaded fastener is inserted. This process of threading the bats is known in the industry as "friction drilling" and then tapping. It is also known as Flow Drilling and further information on this process is available to persons skilled in this art.

In accordance with another important feature which can be used independently of the above, the backer section is formed of plastic and includes a metal insert at the slot so that the threaded fastener applies clamping force through the metal insert and not though the plastic which deforms over time.

In this arrangement preferably the slot is formed in the metal insert. Preferably the insert includes a peripheral recess which receives a band in the plastic backer to hold the insert in the plastic backer section.

In accordance with another important feature which can be used independently of the above, the backer section has a projecting button which extends into a slot in one of the parallel plates to align the backer section to the central core when installing during assembly. Preferably the projecting button is arranged in a face of the backer section facing away from the stripper tooth section.

In accordance with another important feature which can be used independently of the above, the backer section has a ledge along the inner edge thereof arranged to engage and locate the inner edge of the stripper tooth section. Preferably also the backer section has projecting knubs on a face in contact with an adjacent face of the stripper tooth section so that the backer section and the stripper tooth section are lined up by the ledge and the knubs before mounting on the central core

According to a second aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the stripper tooth sections each have a slot extending from the inner edge outwardly toward the outer edge at each of the aligned mounting holes for receiving the respective one of the plurality of threaded fasteners;
wherein the backer sections each have a slot extending from the inner edge outwardly toward the outer edge at each of the aligned mounting holes for receiving the respective one of the plurality of threaded fasteners;
wherein the threaded fastener includes a shoulder for abutting a first of the parallel plates and a threaded section for threaded coupling to a second of the parallel plates so that rotation in a threading direction pulls the parallel plates together; and wherein the second of the parallel plates has a formed thread thereon.

According to a third aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the backer sections each have a slot extending from the inner edge outwardly toward the outer edge at each of the aligned mounting holes for receiving the respective one of the plurality of threaded fasteners;
wherein the backer section is formed of plastic and includes a metal insert at the slot so that the threaded fastener applies clamping force through the metal insert and not though the plastic which deforms over time.

According to a fourth aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the backer section has a ledge along the inner edge thereof arranged to engage and locate the inner edge of the stripper tooth section.

According to a fifth aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the backer section has a projecting button which extends into a slot in one of the parallel plates to align the backer section to the central core when installing during assembly.

According to a sixth aspect of the invention there is provided a crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
wherein the backer sections are manufactured from a Thermoplastic Polyester Elastomer.

Thus the arrangement herein provides a series of key points as follows:
- a- The fingers utilize a "keyhole slot" at each bolt which allows the steel fingers to be removed without removing any bolts.
- b- Shoulder bolts are utilized in the keyhole to facilitate the removal of the steel finger, while the plastic finger is retained during replacement. That is the shoulder bolt only need to back out bolts a few turns to remove the steel fingers.
- c- If both the plastic and steel fingers need to be removed, the fastener can be backed out further yet still left in place to remove both parts at once.
- d- The plastic fingers have a metal insert where the bolts clamp the fingers so it forms a joint where the hardware is not clamping any plastic which deforms over time. This creates a positive joint with proper hardware and finger retention.
- e- The plastic fingers have an additional knub or projection on bottom which fits into a corresponding slot in the bat to precisely align the fingers to the bats when installing hardware during assembly.
- f- The plastic fingers have a ledge along the back of the finger, and knubs on topside which ensure the plastic and steel fingers are lined up before inserting into the bat on assembly. Essentially the steel fingers can be nested in the plastic fingers so they remain as an aligned unit while installing the set.
- g- Typically the plastic fingers are manufactured from ultra high molecular weight Thermoplastic Polyethylene (UHMW).

In the present arrangement the plastic fingers are instead manufactured from a Thermoplastic Polyester Elastomer. This material is selected to provide improved elasticity/steel finger support as well as improved wear of the plastic finger. The difference is in base material (polyester vs polethylene) and classification (elastomer vs polymer). Elastomers are a subset of polymers, made from polymers joined by chemical bonds and slightly cross-linked structure (this provides improved elasticity).

An example of such a material which is suitable is known as Hytrel manufactured by Dupont and the details of this material are known to a person skilled in the art.

### BRIEF DESCRIPTION OF THE DRAWINGS

One embodiment of the invention will now be described in conjunction with the accompanying drawings in which:
Figure 1 is a cross-section through a rotor of a crop stripper header according to the present invention.
Figure 2 is an isometric view of one end of the rotor of Figure 1.
Figure 3 is an isometric view from the front face of one pair of components formed by one stripper tooth section and one backer section for insertion into the rotor of Figure 1.
Figure 4 is an isometric view from the rear face of the pair of components of Figure 3 formed by one stripper tooth section and one backer section for insertion into the rotor of Figure 1.
Figure 5 is cross-sectional view along the lines 5-5 of Figure 4 showing the components installed on the rotor by the threaded fastener.
Figure 5A is cross-sectional view along the lines 5-5 of Figure 4 showing the threaded fastener backed off to a position allowing the removal of the stripper tooth section.
Figure 5B is cross-sectional view along the lines 5-5 of Figure 4 showing the threaded fastener backed off to a position allowing the removal of the backer section.
Figure 6 is a cross-sectional view along the lines 6-6 of Figure 4 showing the components installed on the rotor.
Figure 7 is an expanded view of the front face of Figure 3 showing the keyhole slot in more detail.
Figure 8 is an expanded view of the face of the backer section showing the metal insert in the backet section and the keyhole slot therein in more detail with the metal stripper tooth section removed.
Figures 9 and 9A together provide a view similar to that of Figure 8 with the metal insert removed and shown separated in Figure 9A.

In the drawings like characters of reference indicate corresponding parts in the different figures.

### DETAILED DESCRIPTION

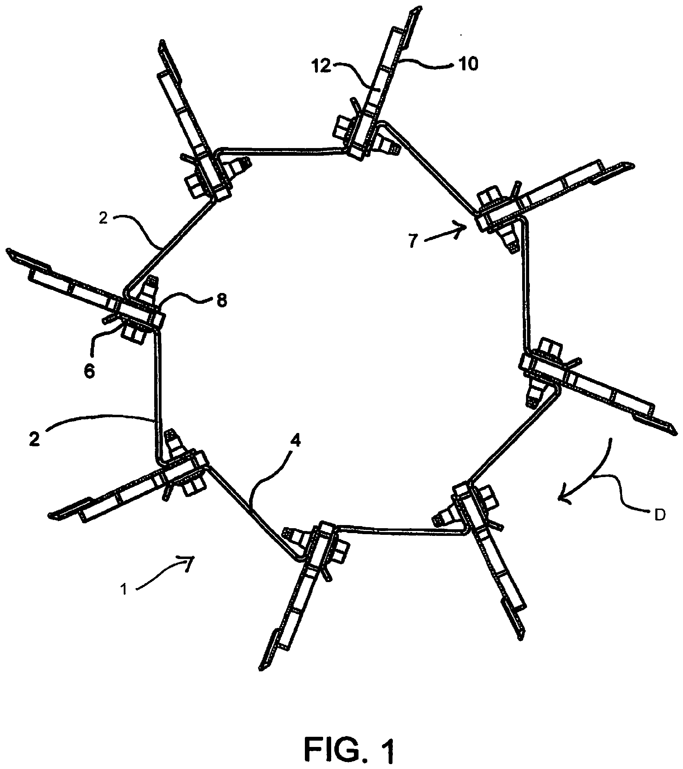

Figure 1 illustrates diagrammatically the construction of the outer shell of a stripper rotor drum 1 which is supported on a central rotary shaft (not shown) to rotate in the arrowed direction. The shell 1 comprises a series of axially extending cover plates 2 which form the peripheral surface of the drum body. Each cover plate is a Z-section member with a main web 4 generally tangential to the rotary axis and from the leading and trailing edges of which project a pair of generally radial wings 6, 8. The wing 6 at the leading edge of the web. is directed outwards and the trailing edge wing 8 is directed inwards.

The wings 6, 8 of adjacent cover plates 2 lie parallel to each other at a small spacing apart to form a slot 7. In the space between each said pair of wings a stripper tooth comb plate or section 10 and a backer strip or section 12 are inserted. The stripper sections or plates 10 and the backer sections or strips 12 are mounted in end-to-end series extending along the length of the drum 1. Each stripper tooth section is pressed for example from a thin (0.6 mm) spring steel plate. It is given a comb profile of a generally conventional form comprising a series of tapering teeth 14 with part circular openings 16 between the tooth roots 16A. In the pressing operation, the profile is formed with a small rearwardly directed V-shaped flange 18 that extends partly along the toothed profile but not into the openings 16.

The V-shaped flange 18 increases the stiffness of the comb plate or section 10 over the height of the tooth profile but the inner margin 22 of the section 10 between the teeth 14 and the opening 16 and the shorter wing 6 of the plate 2 is free from the flange 18 and thus is planar so that the thin spring steel has considerable flexibility in the circumferential direction of the rotor drum. In use, therefore, with the drum rotating in the direction D, the comb section 10 can deflect rearwards if it strikes an obstacle on the ground, as a result of the flexibility of the inner margin.

The arrangement offers several advantages compared with conventional comb plates of plastics. These relatively soft and flexible materials have been used because they do little damage to the standing plants and because they flex easily if they strike obstacles, such as stones. The spring steel comb plate has a much longer operational life because of the resistance of the metal to abrasion. The flanged edges 18 of the comb section 10 present a smooth face to the crop and are found to be surprisingly effective in reducing the potential for crop damage that has hitherto made the use of metal comb plates impractical for many crops. The stiffening of the individual teeth of the comb section 10 by the flanges 18 could make them vulnerable to damage from stray impacts, but it is found the comb section 10 can still be made sufficiently flexible to avoid this defect by a suitable choice of sheet metal and the manner of support over its inner margin by the backer section 12. The ability to manufacture the comb plates as simple pressings keeps their cost down.

The axial length of stripper drum 1 is typically several metres and as a practical matter each row of teeth is made up from a number of short, usually identical, comb sections 10.

The backer section 12 is sandwiched between the front face of the stripper tooth section 10 and the trailing wing 6 of the cover plate 2. The backer section 12 extends over the inner margin of the stripper tooth sections 10, its outer edge lying at the same radius from the drum 1 centre as the part circular or bulbous root openings 16. The backer section 12 therefore does not alter the active or stripping profile of comb section 10. To fulfil this function the backer section 12 can be of a softer material than the stripper section 10 itself, so it is typically of plastic. Although the stripper section 10 described has the potential for a long operational life, it is necessary to replace the plates from time to time. However, because of the high loadings they experience, both from centrifugal forces and from the resistance of the crop through which they move, they must be locked firmly in place. For these reasons, the stripper sections 10 are conventionally provided with a number of holes for screw bolts by means of which they are located and clamped between the drum cover plate wings 6 and 8 in the slot 7. To replace a stripper section 10, therefore, the bolts securing it are first removed from the drum to allow the damaged section 10 to be slipped out, a new section 10 is put in place and its bolt holes registered with the bolt holes in the cover plate wings 6 and 8, and finally the bolts are reinserted and re-attached to their captive nuts and tightened. This procedure can result in considerable downtime, particularly if it must be repeated with a number of stripper sections 10 and associated backer sections 12.

The arrangement herein thus provides crop stripper rotor 1 comprising the central core 2 for rotation about a central longitudinal axis of the central core. The central core is formed of the plate or bats 4 which are assembled and connected by the flanges or coupling plates 6 and 8 defining stripper mounting arrangements defined by the slots 7 at angularly spaced locations around the axis.

Each stripper mounting arrangement is thus formed by the pair of parallel plates 6 and 8 which extend longitudinally of the axis along the core 1 and define between them a slot 7 facing outwardly of the axis. The slot can be directly radial of the axis or may be inclined to the radial in an advanced or retarded direction.

The arrangements thus include a plurality of the elongate stripper tooth sections 10 each having a plurality of stripper teeth 14 at longitudinally spaced positions on the outer edge 141 of the stripper tooth sections 10. These sections are paired with a plurality of elongate backer sections 12 each also having a plurality of backer fingers 15 therealong at longitudinally spaced positions on the outer edge 151 of the backer sections where the stripper tooth sections and the backer sections are arranged to overlie with the stripper teeth 14 aligned with the backer fingers 15 to form a pair. The stripper tooth sections 10 and the backer sections 12 each have an inner edge 142, 152 at the central core so as to be inserted in a respective one of the slots 7.

Thus the pair of the stripper tooth sections 10 and the backer sections 12 have the inner edges thereof inserted into the slot 7 of a respective one of the stripper mounting arrangements so as to be received therein in overlying arrangement. The pairs of the stripper tooth sections 10 and the backer sections 12 are arranged end to end along the slot 7.

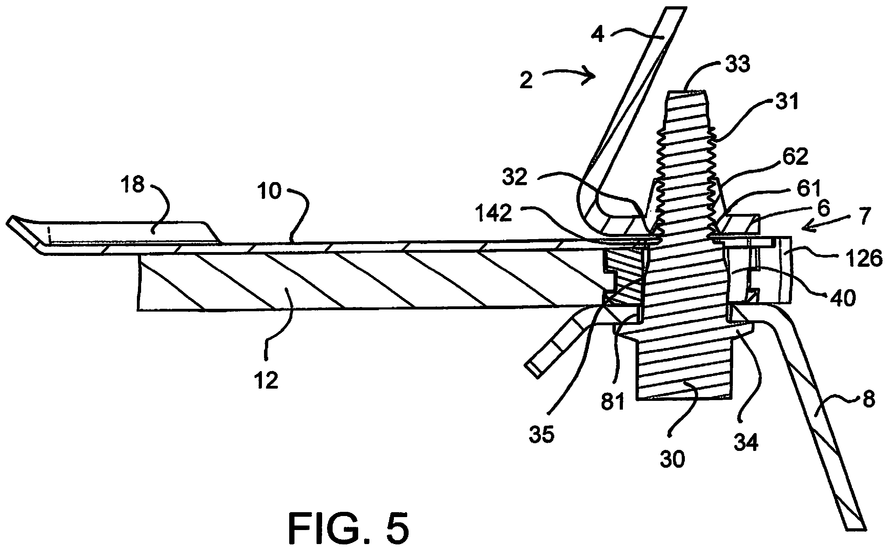

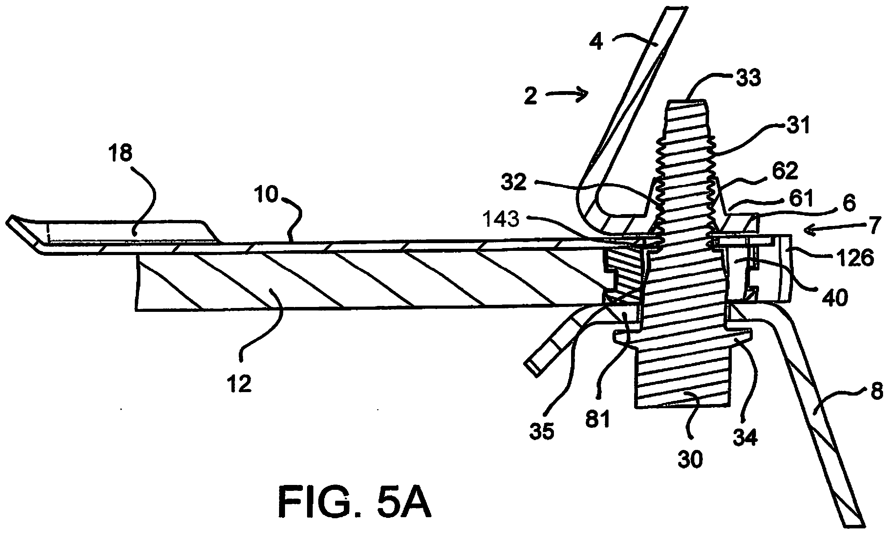

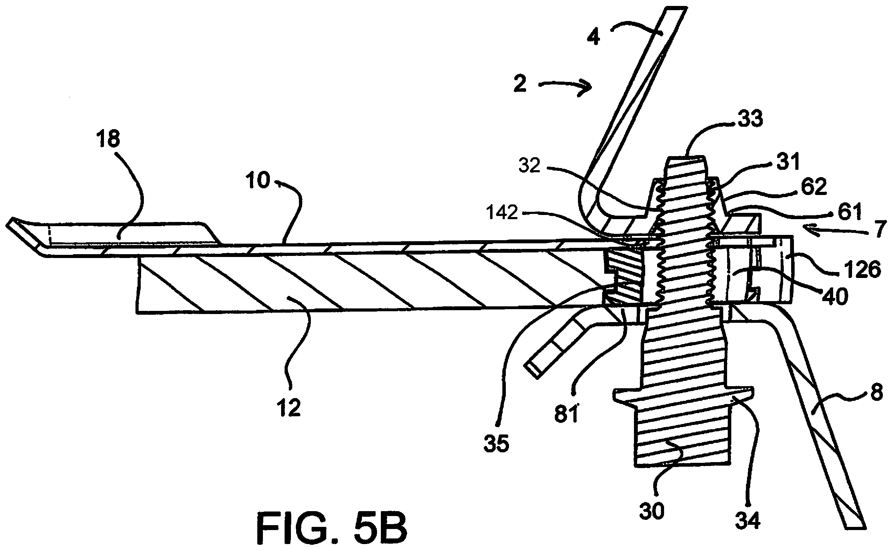

As best shown in the cross-section of Figure 5, the pair of parallel plates 6 and 8 defining the slot 7 include for each pair of stripper tooth sections 10 and the backer sections 12 aligned mounting holes 61 and 81 each for receiving a respective threaded fastener 30 extending through the mounting holes to clamp the plates 6 and 8 together to secure the stripper tooth section 10 and the backer section 12 to the central core 1. The threaded fastener 30 includes a threaded section 31 extending from a shoulder 32 to an outer end 33 of the fastener which threaded section 31 is threadedly connected to a threaded collar 62 of the parallel plate 6 at the hole 61.

The threaded collar 62 can optionally be formed by attaching a nut to the plate 6 so that the rotation of the fastener 30 acts to pull the plate 6 toward a shoulder 34 butting the plate 8 to cause the clamping action. The fastener 30 is free to rotate in the hole 81 in the plate 8 which is not threaded.

More preferably however the collar 62 is formed by heated forging of the threaded fastener through the hole 61 which forces the material of the plate 6 into the collar 62 to intimately engage the threaded section 31.

Thus the threaded fastener 30 includes the shoulder 34 for abutting the plate 8 and a threaded section 32 for threaded coupling to the other plate 6 so that rotation in a threading direction pulls the parallel plates 6 and 8 together.

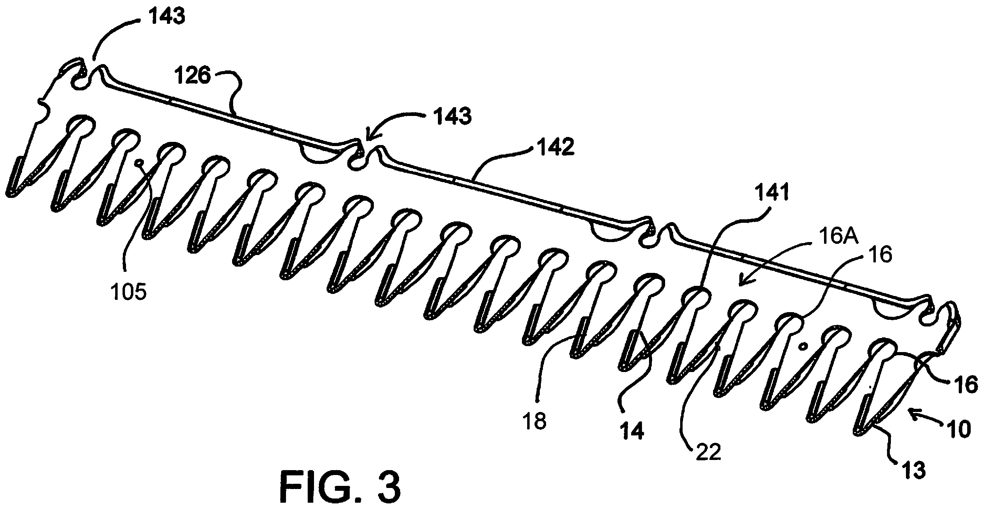

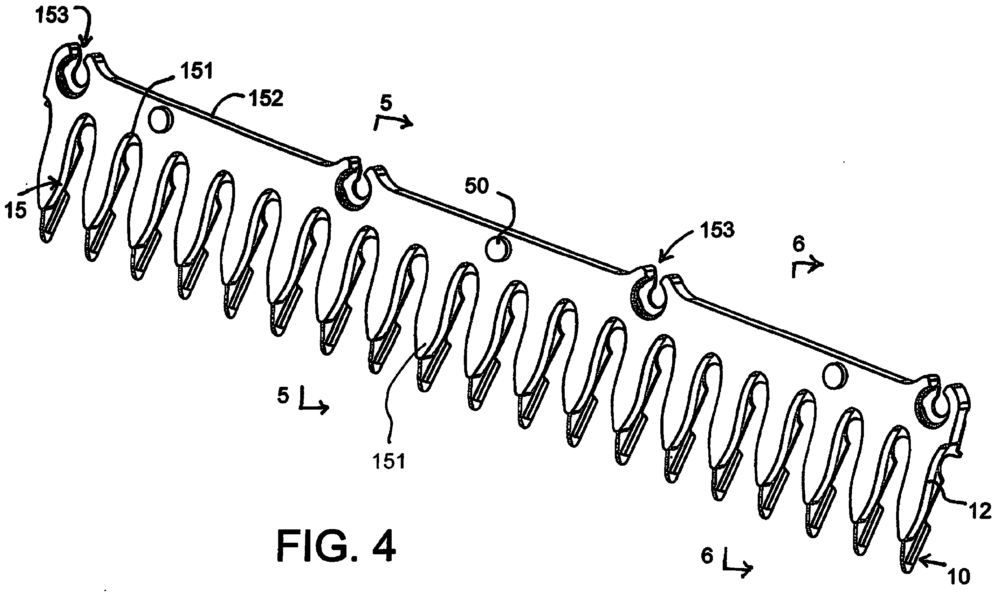

As best shown in Figure 3 and 4. the stripper tooth section 10 has a plurality of longitudinally spaced slots 143 each extending from the inner edge 142 outwardly toward the outer edge 141 for cooperation with a respective fastener 30 at each of the aligned mounting holes 61 and 81 for receiving the threaded fastener 30 therein.

Symmetrically the backer section 12 has a plurality of longitudinally spaced slots 153 each extending from the inner edge 152 outwardly toward the outer edge 151 for cooperation with a respective fastener 30 at each of the aligned mounting holes 61 and 81 for receiving the threaded fastener 30 therein.

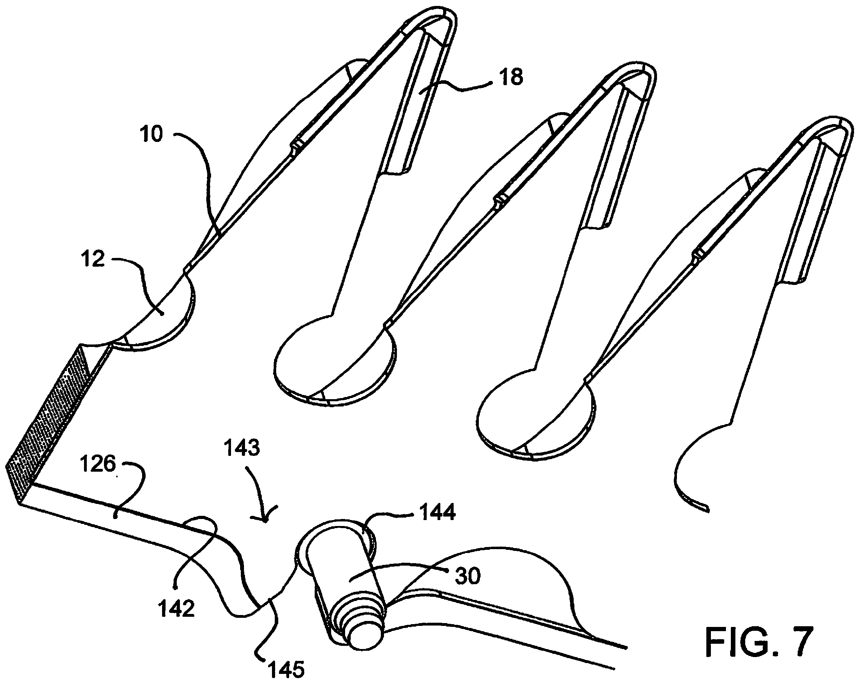

As best shown in Figure 7 the slot 143 is key hole shaped to define a narrower section 145 at the inner edge 142 and a wider section 144 at a position spaced from the inner edge 142.

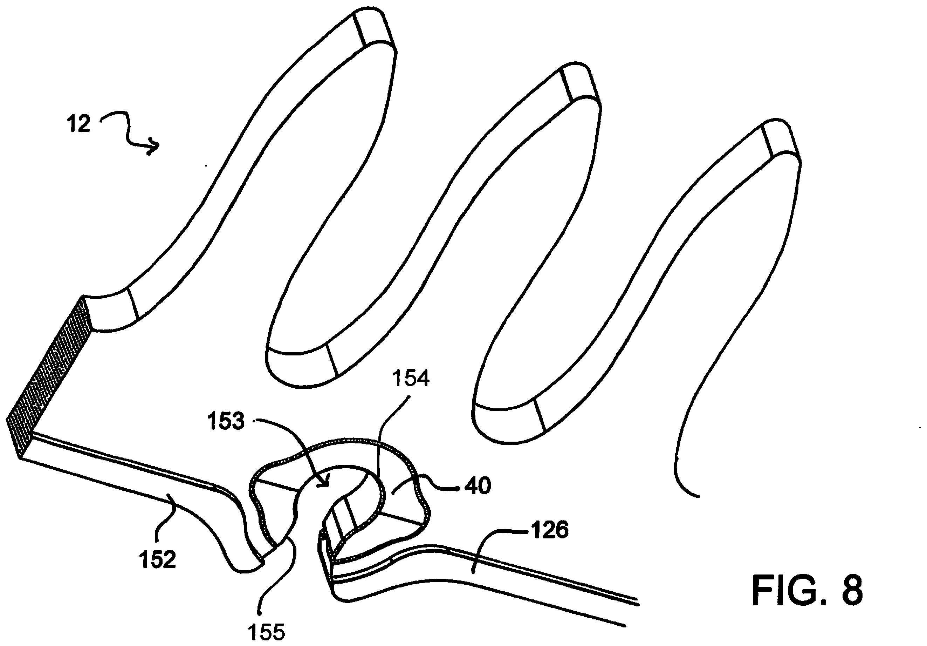

As best shown in Figure 8 the slot 153 is key hole shaped to define a narrower section 155 at the inner edge 152 and a wider section 154 at a position spaced from the inner edge 152.

As best shown in the cross-section of Figures 5, 5A and 5B each threaded fastener 30 has a wider portion 35 for engaging into the wider section 144 of the slot 143 and an axially spaced narrower portion defined by the threaded section 31 for engaging into the narrower section 145 of the slot 143.

In this way the threaded fastener 30 is arranged in Figure 5 such that in a fastened position the wider portion 35 is axially aligned with the slot 143 in the stripper tooth section 10 to hold the stripper tooth section against movement in the outward direction as the wider portion cannot pass through the narrower potion 145 of the slot 143. The wider portion 35 is also axially aligned with the slot 153 in the backer section 10 to hold the backer section 10 against movement in the outward direction as the wider portion cannot pass through the narrower potion 155 of the slot 153.

In Figure 5A, the threaded fastener 30 is rotated in an unthreading direction which moves the threaded narrower portion 31 axially to align the threaded narrower portion 31 with the slot 143 and thus with the narrower portion 145 of the slot 143 to allow the stripper tooth section 10 to move in the outward direction for release from the mounting assembly. In this position the wider portion 35 of the fastener 30 remains aligned with the slot 153 in the backer section 12 so that the backer section 12 is still held on the fastener 30.

In Figure 5B, the threaded fastener 30 is rotated in an unthreading direction to a further distance which moves the threaded narrower portion 31 axially to align the narrower portion 155 of the slot 153 in both the backer section 12 to allow both the stripper tooth section 10 and the backer section 12 to move in the outward direction for release from the mounting assembly. It will be noted that the length of the threaded section 31 is sufficient such that the thread remains engaged in the collar 62 and thus is held in place against being lost while the sections 10 and 12 are removed.

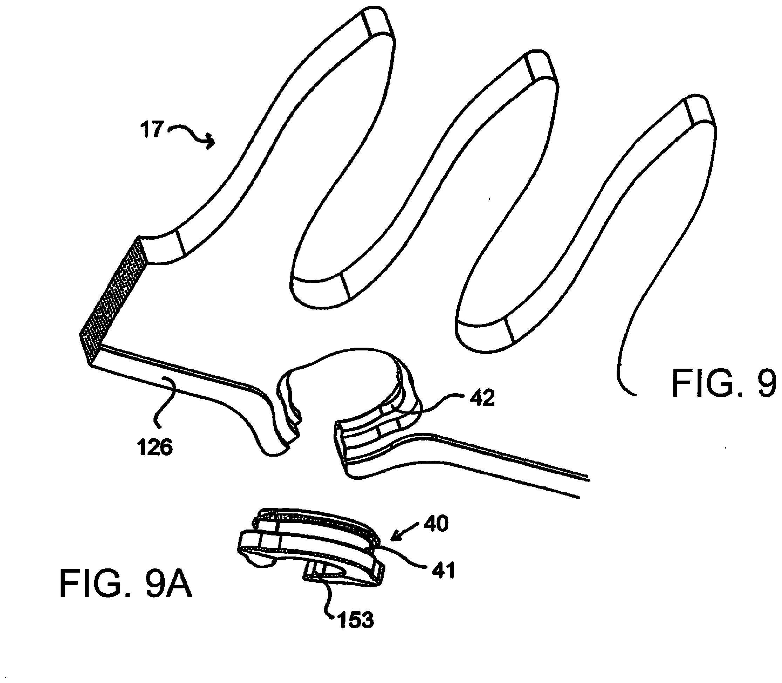

As best shown in Figures 8, 9 and 9A, the backer section is formed of plastic as is conventional and includes a metal insert 40 at the slot 153. The insert 40 forms a collar surrounding the fastener 30 so that the slot 153 is formed in the metal insert rather than in the plastic. In this way the threaded fastener applies clamping force between the plates 6 and 8 through the metal insert 40 and not though the plastic, which tends to deform over time with the result that the connection cannot be properly maintained. In order to better hold the insert in place in the plastic, the insert 40 includes a peripheral recess 41 which receives a band 42 in the plastic portion of the backer section to hold the insert 41 in the plastic backer section 12.

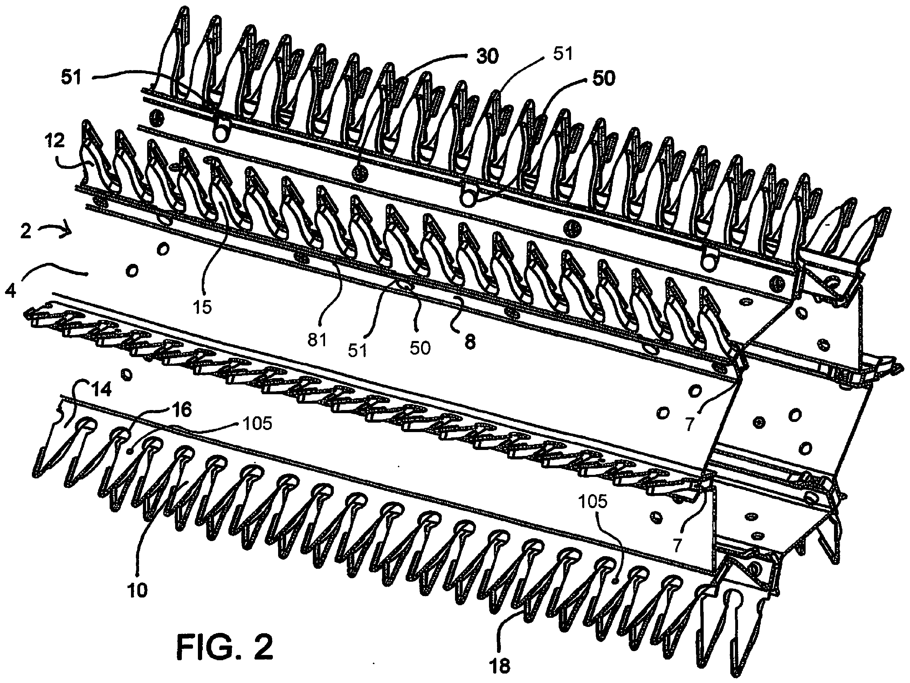

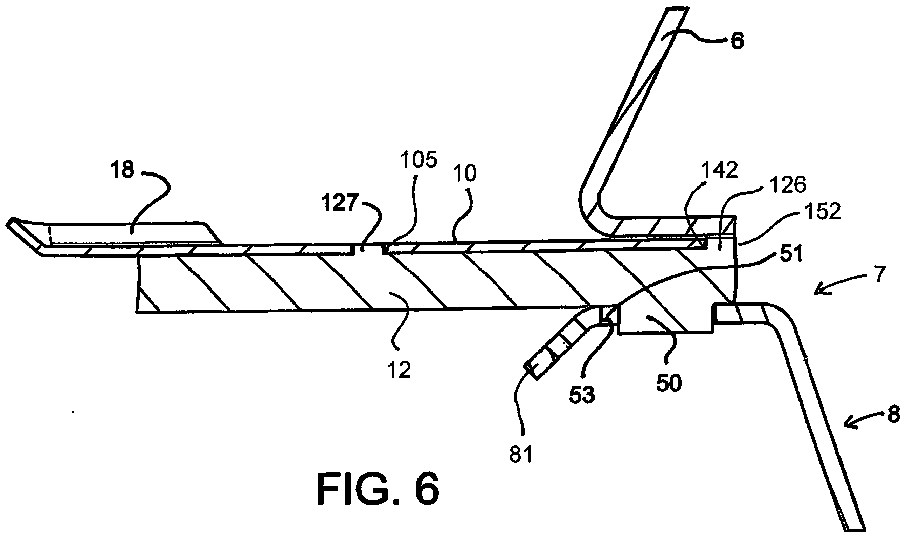

As best shown in the cross-section of Figure 6 and also in Figure 2, the backer section 12 has a series of longitudinally spaced projecting buttons 50 each of which extends into a respective slot 51 in the plate 8 to align the backer section 12 to the central core 1 when installing the backer section 12 into the slot 7 between the plates 6 and 8 during assembly. Thus as an assembly, of the backer section 12 and the stripper tooth section 10 in overlying position, is brought up toward the slot 7 for installation, the button 50 is guided manually to align with the slot 51 so that it slips into the slot underneath an edge flange portion 81 of the plate 8 at the edge 53 to engage into the slot 51. In this position of the combined assembly the keyhole slots 143, 153 are automatically aligned with the fasteners 30 which have been left in place in the collar 62 in the plate 6. The projecting button 50 is arranged in a face of the backer section 12 facing away from the stripper tooth section 10 as shown in Figure 6.

In order to assist in holding the inner edge 142 of the stripper tooth section 10 in alignment with the inner edge 152 of the backer section 12, also as shown in Figure 6, the backer section 12 has formed in the plastic body thereof a raised ledge 126 along the inner edge 152 thereof arranged to engage and locate the inner edge 142 of the stripper tooth section 10. Also the backer section 12 has projecting knubs 127 on a face of the backer section in contact with an adjacent face of the stripper tooth section 10 which engage into holes 105 in the section 10 so that the backer section 12 and the stripper tooth section 10 are lined up in the combined assembly by the ledge 126 and the knubs 127 before mounting on the central core.

## Claims

1. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
each threaded fastener being threadedly connected to one of the parallel plates;
wherein the stripper tooth sections each have a receiving slot extending from the inner edge outwardly toward the outer edge at each of the aligned mounting holes for receiving the respective one of the plurality of threaded fasteners;
wherein each of the receiving slots is key hole shaped to define a narrower section at the inner edge and a wider section at a position spaced from the inner edge;
and wherein each threaded fastener has a wider portion for engaging into the wider section of the receiving slot and a narrower portion spaced along the fastener for engaging into the narrower section of the receiving slot;
the threaded fastener being arranged such that in a fastened position the wider portion is aligned with the receiving slot in the stripper tooth section to hold the stripper tooth section against movement in the outward direction;
the threaded fastener being arranged such that rotation thereof in an unthreading direction thereof moves the narrower portion longitudinally of the fastener to align the narrower portion of the slot in the stripper tooth section to allow the stripper tooth section to move in the outward direction for release.

2. The crop stripper rotor according to claim 1 wherein the backer sections each have a receiving slot extending from the inner edge outwardly toward the outer edge at each of the aligned mounting holes for receiving the respective one of the plurality of threaded fasteners;
wherein each of the receiving slots of the backer sections is key hole shaped to define a narrower section at the inner edge and a wider section at a position spaced from the inner edge;
and wherein each threaded fastener has a wider portion for engaging into the wider section of the receiving slot of the backer section and a narrower portion spaced longitudinally of the fastener for engaging into the narrower section of the receiving slot;
the threaded fastener being arranged such that in a fastened position the wider portion is aligned with the receiving slot in the backer section to hold the backer section against movement in the outward direction;
the threaded fastener being arranged such that rotation thereof in an unthreading direction thereof moves the narrower portion longitudinally of the fastener to align the narrower portion of the receiving slot in the backer section to allow the backer section to move in the outward direction for release.

3. The crop stripper rotor according to any preceding claim wherein the threaded fastener includes a shoulder for abutting a first of the parallel plates and a threaded section for threaded coupling to a second of the parallel plates so that rotation in a threading direction pulls the parallel plates together.

4. The crop stripper rotor according to claim 3 wherein the second of the parallel plates has a thread in a hole therein formed by friction drilling and tapping or flow drilling

5. The crop stripper rotor according to any preceding claim wherein the backer section is formed of plastic and includes a metal insert at the receiving slot so that the threaded fastener applies clamping force through the metal insert and not though the plastic.

6. The crop stripper rotor according to claim 5 wherein the receiving slot is formed in the metal insert.

7. The crop stripper rotor according to claim 5 or 6 wherein the insert includes a peripheral recess which receives a band in the plastic backer to hold the insert in the plastic backer section.

8. The crop stripper rotor according to any preceding claim wherein each backer section has at least one projecting button which extends into a mounting slot in one of the parallel plates to align the backer section axially relative to the axis of the central core when installing during assembly.

9. The crop stripper rotor according to claim 8 wherein the projecting button is arranged in a face of the backer section facing away from the stripper tooth section.

10. The crop stripper rotor according to any preceding claim wherein each backer section has a ledge along the inner edge thereof arranged to engage and locate the inner edge of the respective stripper tooth section.

11. The crop stripper rotor according to claim 10 wherein each backer section has projecting knubs on a face in contact with an adjacent face of the stripper tooth section so that the backer section and the stripper tooth section are lined up by the ledge and the knubs before mounting on the central core

12. The crop stripper rotor according to any preceding claim wherein the backer sections are manufactured from a Thermoplastic Polyester Elastomer.

13. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the stripper tooth sections each have a receiving slot extending from the inner edge outwardly toward the outer edge at each of the aligned mounting holes for receiving the respective one of the plurality of threaded fasteners;
wherein the backer sections each have a receiving slot extending from the inner edge outwardly toward the outer edge at each of the aligned mounting holes for receiving the respective one of the plurality of threaded fasteners;
wherein the threaded fastener includes a shoulder for abutting a first of the parallel plates and a threaded section for threaded coupling to a second of the parallel plates so that rotation in a threading direction pulls the parallel plates together; and wherein the second of the parallel plates has a thread thereon in a hole therein formed by friction drilling and tapping or flow drilling

14. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein the backer sections each have a receiving slot extending from the inner edge outwardly toward the outer edge at each of the aligned mounting holes for receiving the respective one of the plurality of threaded fasteners;
wherein the backer section is formed of plastic and includes a metal insert at the receiving slot so that the threaded fastener applies clamping force through the metal insert and not though the plastic.

15. The crop stripper rotor according to claim 14 wherein the receiving slot is formed in the metal insert.

16. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein each backer section has a ledge along the inner edge thereof arranged to engage and locate the inner edge of the respective stripper tooth section.

17. The crop stripper rotor according to claim 16 wherein each backer section has projecting knubs on a face in contact with an adjacent face of the stripper tooth section so that the backer section and the stripper tooth section are lined up by the ledge and the knubs before mounting on the central core.

18. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
the pair of parallel plates having for each pair of stripper tooth sections and the backer sections aligned mounting holes each for receiving a respective one of a plurality of threaded fasteners extending through said mounting holes to secure the pair of stripper tooth sections and the backer sections to the central core;
wherein each backer section has a projecting button which extends into a mounting slot in one of the parallel plates to align the backer section axially relative to the central core when installing during assembly.

19. The crop stripper rotor according to claim 18 wherein the projecting button is arranged in a face of the backer section facing away from the stripper tooth section.

20. A crop stripper rotor, comprising:
a central core for rotation about a central longitudinal axis of the central core;
the central core including a plurality of stripper mounting arrangements at angularly spaced locations around the axis;
each stripper mounting arrangement comprising a pair of parallel plates extending longitudinally of the axis and defining therebetween a slot facing outwardly of the axis;
a plurality of elongate stripper tooth sections each having a plurality of stripper teeth at longitudinally spaced positions on an outer edge of the stripper tooth sections;
a plurality of elongate backer sections each having a plurality of backer fingers therealong at longitudinally spaced positions on an outer edge of the backer sections;
the stripper tooth sections and the backer sections being arranged to overlie with the stripper teeth aligned with the backer fingers to form a pair;
the stripper tooth sections and the backer sections each having an inner edge at the central core;
the pair of the stripper tooth sections and the backer sections having the inner edge thereof inserted into the slot of a respective one of the stripper mounting arrangements so as to be received therein in overlying arrangement;
the pairs of the stripper tooth sections and the backer sections being arranged end to end along the slot;
wherein the backer sections are manufactured from a Thermoplastic Polyester Elastomer.
